# EUROPÄISCHE PATENTSCHRIFT

(11) **EP 0 666 213 B1**
(45) Veröffentlichungstag und Bekanntmachung des Hinweises auf die Patenterteilung: **16.12.1998**
(21) Anmeldenummer: 95100333.4
(22) Anmeldetag: 12.01.1995
(51) Int. Cl.: B64D 11/02, E03B 7/10

(54) **Wassersystem mit mindestens einer Vorrichtung zum Eisfreihalten von einseitig offenen Flüssigkeitsleitungen**
Water circuit with at least one anti freezing device for a one end pipe
Circuit d'eau avec au moins un dispositif antigivre pour une conduite ouverte d'un seul côte

(30) Priorität: 02.02.1994 DE 4403067
(43) Veröffentlichungstag der Anmeldung: 09.08.1995
(73) Patentinhaber: Daimler-Benz Aerospace Airbus Gesellschaft mit beschränkter Haftung, 21129 Hamburg (DE)
(72) Erfinder: Frank, Helge, Dipl.-Ing., D-21147 Hamburg (DE)
(74) Vertreter: Hansmann, Dierk, Dipl.-Ing.

(56) Entgegenhaltungen:
- DE-A- 4 227 517
- US-A- 1 541 719
- PATENT ABSTRACTS OF JAPAN vol. 6 no. 232 (M-172) [1110] ,18.November 1982 & JP-A-57 134086 (TOSHIO YANO) 19.August 1982,

## Beschreibung

Die Erfindung betrifft ein Wassersystem mit mindestens einer Vorrichtung zum Eisfreihalten von einseitig offenen Flüssigkeitsleitungen, die an einer Rohrverzweigung von einer Hauptverteilleitung zu einer einseitig offenen Flüssigkeitsleitung vorgesehen ist, wobei sich in der Hauptverteilleitung eine strömende Flüssigkeit befindet und eine Fördereinrichtung mit Eintritts- und Austrittsöffnung vorgesehen ist, deren Eintrittsöffnung in die Hauptverteilleitung zur Aufnahme der strömenden Flüssigkeit hineinragt und in Richtung der einseitig offenen Flüssigkeitsleitung mindestens eine Austrittsöffnung aufweist.

Aus dem Dokument Patent Abstracts of Japan, vol. 6, no. 232 (M-172) [1110] (JP-A-57134086) ist eine solche Vorrichtung bekannt. Das Merkmal "einseitig offene Flüssigkeitsleitung" ist in diesem Dokument als eine Verbindung von dem (sehr kurzen) Ventilgehäuse und dem Rohranschluß verwirklicht. Mittels einer erzwungenen Strömung wird ein Eisfreihalten des Ventils erreicht, wobei dies mit einer externen Verlegung einer Hilfsleitung realisiert ist.
Mit dieser externen Verlegung der Hilfsleitung ist der Nachteil verbunden, daß in der Hauptverteilleitung und im Gehäuse des Ventils Durchbrüche notwendig sind, was einen größeren Herstellungsaufwand bedeutet. Darüber hinaus verursacht die Hilfsleitung einen höheren Montageaufwand und insbesondere bei beengten Verhältnissen, wie z. B. in einem Flugzeug ist eine solche zusätzliche Leitung nicht akzeptabel, da nicht nur auf einer kurzen Distanz ein Eisfreihalten erreicht werden soll, sondern auch längere Stichleitungen durchströmt werden müssen.

Aus dem Dokument US-A-1 542 719 ist ein Wassersystem als Hausinstallationsanlage gezeigt, welches bei geschlossenem Hauptventil in Hausverteilleitungen zur Eisfreihaltung einen stetigen "kleinen" Fluß vom Hauptwasserrohr zum Tank ermöglicht. In den Hausverteilleitungen ist eine Hilfsleitung eingebracht, wobei ausgehend vom statischen Druck im Hauptwasserrohr ein Wasserfluß durch die Hilfsleitung möglich sein soll und so auch bei sich bildendem Eis in den Hausverteilleitungen ein dünner Wasserfilm an der Hilfsleitung herablaufen und zumindest die Mitte der Hausverteilleitungen von Eis freigehalten werden soll. Aufgrund des statischen Druckes, der im Hauptwasserrohr herrscht, ist ein Ablaufen des Wassers entlang der Hilfsleitung aber nur begrenzt möglich. Eine Eisbildung in der Verteilleitung wird somit explizit zugelassen.
Aus der DE-A-42 27 517 sowie aus DE-A-42 02 719 ist ein Wassersystem für ein Flugzeug mit einem Wassertank und einer Verteilleitung bekannt, woran über Stichleitungen Entnahmestellen angeschlossen sind. Um ein derartiges Wassersystem wahrend des Fluges eisfrei zu halten, wird ein Einfrieren der Verteilleitung bei einer kalten Flugzeugumgebung dadurch verhindert, daß sie kontinuierlich mit bedarfsweise vorgewärmtem Wasser durchspült wird und die Leitungen mit einer Isolation versehen sind. Mit der Bewegung des Wassers innerhalb der Verteilleitung kann mit nur einem geringen Energieverbrauch eine Eisbildung verhindert werden, jedoch werden die an die Verteilleitung angeschlossenen Stichleitungen zu den Entnahmestellen nicht durchspült. Diese Stichleitungen müssen entweder durch seperate Heizungen eisfrei gehalten werden oder sie werden als Doppelleitungen in die Verteilleitung integriert, um eine Durchspülung zu gewährleisten, was zu einer aufwendigen Leitungsanordnung und hohen Strömungswiderständen im Wasserkreislauf führt.
Weiterhin ist aus der DE 42 27 518 A1 eine Vorrichtung zur Wasserverteilung in Flugzeugen bekannt, mit der eine Förderung von Wasser durch die Hauptleitung nur zu bestimmten Zeitpunkten erfolgt und im Zeitraum dazwischen die Hauptleitung über ein Belüftungsventil entleert wird, um ein Einfrieren bei kalter Umgebung zu verhindern. Mit dieser Vorrichtung können die Stichleitungen ebenfalls über Belüftungsventile entleert werden. Ein Entleeren des gesamten Wasserverteilungssystems mit den angeschlossenen Stichleitungen während eines Fluges erscheint infolge des ständigen Gebrauchs von Wasser entweder im Bereich der Toiletten oder im Bereich der Bordküchen wenig sinnvoll, da zusätzlich an den Entnahmestellen Wasserspeicher zur Verfügung stehen müssen.

Die bislang verwendeten Wassersysteme in Flugzeugen weisen demzufolge den Nachteil auf, daß mittels energieintensiver Heizelemente eine Eisbildung verhindert werden muß oder eine sehr aufwendige Leitungsanordnung nötig ist, die bei den beengten Verhältnissen in einem Flugzeug problematisch ist.

Demgemäß liegt der Erfindung die Aufgabe zugrunde, eine gattungsgemäße Vorrichtung derart auszubilden, daß ein Eisfreihalten von einseitig offenen Rohren, vorzugsweise von Stichleitungen innerhalb eines Wassersystems eines Flugzeuges, mit einem minimalen Energieverbrauch und einer vereinfachten Leitungsanordnung realisiert wird. Infolge der speziellen Verhältnisse in einem Flugzeug ist eine möglichst raum- und gewichtssparende Anordnung zu schaffen.

Diese Aufgabe ist bei einer gattungsgemäßen Vorrichtung mit den kennzeichnenden Merkmalen des Anspruchs 1 gelöst.

Insbesondere vorteilhaft ist, daß ein Eisfreihalten von einseitig offenen Rohren bei kalter Umgebung mit einem gegenüber bisherigen Lösungen wesentlich geringeren Energieverbrauch und einer vereinfachten, platzsparenden Leitungsanordnung realisierbar ist.

Mit der erfindungsgemäßen Vorrichtung wird realisiert, daß zumindest ein Teil des Flüssigkeitsstromes einer Hauptverteilleitung infolge des dynamischen Druckes dem innerhalb der Stichleitung liegenden Schlauch zugeführt wird, an dessen Austrittsöffnung die Flüssigkeit herausfließt und innerhalb der Stichleitung zurück zur Hauptverteilleitung fließt und damit eine dauernde Strömung erzeugt wird, die das Einfrieren der Stichleitung verhindert.

Weiterbildungen und zweckmäßige Ausgestaltungen ergeben sich aus den Unteransprüchen 2 - 10.

Mit der Maßnahme gemäß Anspruch 2 ergibt sich der Vorteil, daß der zu treibende Flüssigkeitstrom in Richtung Stichleitung mit dem Flüssigkeitstrom in der Hauptverteilleitung erzeugt wird.

Aufgrund der alternativen Anordnungen gemäß der Ansprüche 3 und 4 kann der Montageaufwand zum Einbringen von Mitteln zur Eisfreihaltung in ein Wassersystem minimiert werden.

Aus den Ansprüchen 5 oder 6 ergibt sich der Vorteil, daß damit eine von der Strömungsrichtung der Flüssigkeit in der Hauptverteilleitung unabhängige Ausgestaltung der Vorrichtung zum Eisfreihalten realisiert wurde. Es kann innerhalb der Hauptverteilleitung die Förderrichtung des Flüssigkeitsstromes geändert werden, ohne daß Umschaltungen an der Vorrichtung zum Eisfreihalten notwendig sind.

Mit der Ausbildung nach Anspruch 7 ist es möglich, auch Stichleitungen großer Länge oder eine große Anzahl von Verzweigungen, bei denen der notwendige Staudruck nicht mit dem in der Hauptverteilleitung vorhandenen Flüssigkeitsstrom erreichbar ist, eisfrei zu halten.

Anspruch 8 zeigt eine Alternativlösung zum Anspruch 2, wobei zur Förderung des Flüssigkeitsstromes ein Turbinenrad vorgesehen ist.

Aus Anspruch 9 ergibt sich der Vorteil, daß eine Anpassung der Drehrichtung der Servopumpe entsprechend dem Flüssigkeitstrom in der Hauptverteilleitung erfolgen kann.

Die Maßnahme gemäß Anspruch 10 zeigt eine Verwendung des erfindungsgemäßen Wassersystems in einem Passagierflugzeug. Vorteilhaft ist hierbei, daß eine Wasserentnahme während eines Fluges jederzeit gewährleistet ist ohne zusätzliche Heizenergie oder aufwendige Leitungsanordnungen. Eine platzsparende Anordnung ist somit gewährleistet. Ein Einfrieren der Stichleitungen zu den Entnahmestellen innerhalb des Wassersystem wird ohne zusätzlichen Aufwand wirkungsvoll verhindert.

Die Erfindung wird nachstehend beschrieben und anhand der Figuren 1 - 5 näher erläutert.

Es zeigen
- Fig. 1: sinnbildlich ein Wassersystem, bei dem eine ringförmige Hauptverteilleitung vorgesehen ist,
- Fig. 2: eine Vorrichtung zum Eisfreihalten einer Stichleitung für ein Wassersystem mit einer Hauptverteilleitung mit kontinuierlichem Flüssigkeitsstrom in einer Richtung,
- Fig. 3: eine Vorrichtung zum Eisfreihalten verzweigter Stichleitungen,
- Fig. 4: eine Vorrichtung zum Eisfreihalten einer Stichleitung für ein Wassersystem bei wechselnder Strömungsrichtung in der Hauptverteilleitung und
- Fig. 5: eine weitere Vorrichtung zum Eisfreihalten einer Stichleitung für ein Wassersystem bei wechselnder Strömungsrichtung in der Hauptverteilleitung.

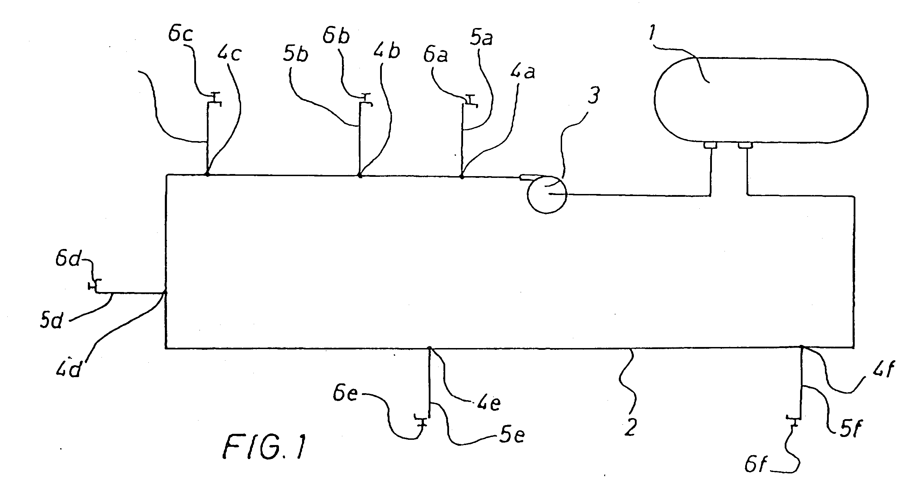

Ein Wassersystem in einem Flugzeug besteht entsprechend Fig. 1 im wesentlichen aus einem Wassertank 1 und einer Hauptverteilleitung 2, woran über Rohrverzweigungen 4a bis 4f Stichleitungen 5a bis 5f angeschlossen sind. Die Stichleitungen 5a bis 5f stellen die Verbindung von der Hauptverteilleitung 2 zu den Entnahmestellen 6a bis 6f her. Die Entnahmestellen 6a bis 6f befinden sich im Bereich der Bordküche oder im Bereich der Toiletten und sind beispielsweise als Wasserhähne ausgebildet und vorzugsweise mit Absperrventilen 7 versehen. In der als Ringleitung ausgebildeten Hauptverteilleitung 2, die mit dem Wassertank 1 in Reihe geschaltet ist, ist eine Pumpe 3 zum Flüssigkeitstransport angeordnet, damit die Zirkulation des Wassers gewährleistet ist. Vorzugsweise ist die Ringleitung 2 horizontal im Bereich des Flugzeugfußbodens angeordnet und die Stichleitungen 5a bis 5f zu den Entnahmestellen 6a bis 6f verlaufen in annähernd vertikaler Richtung zu den Verbrauchern im Kabinenbereich.

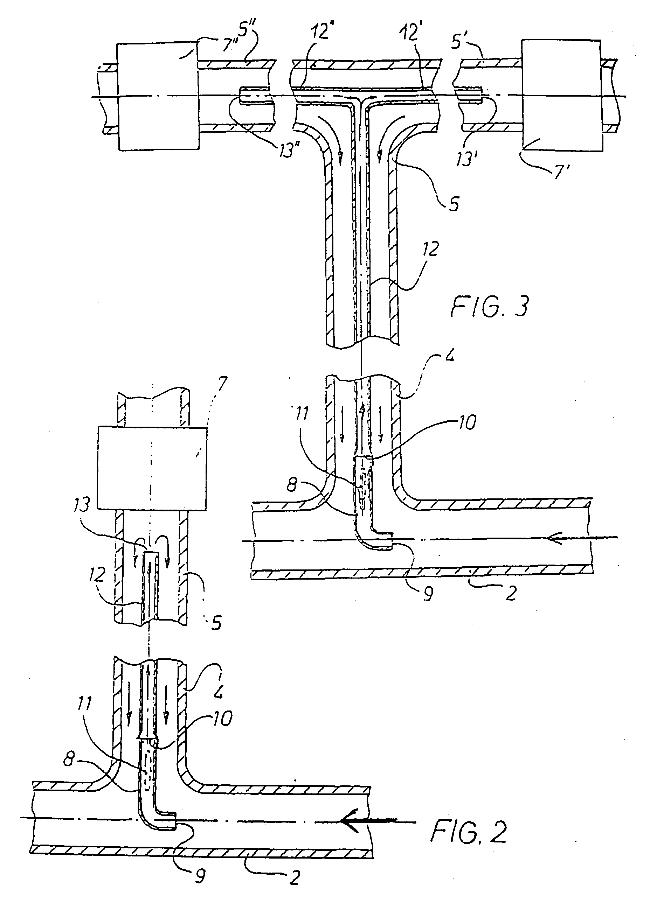

In Fig. 2 ist eine Rohrverzweigung 4 gezeigt, die entsprechend der Fig. 1 eine Verbindung zwischen der Hauptverteilleitung 2 und der Stichleitung 5 zu den Entnahmestellen 6 herstellt. Innerhalb dieser Rohrverzweigung 4 ist eine Fördereinrichtung vorgesehen. Sie besteht im wesentlichen aus einem L-förmigen Staurohr 8, das mit seiner Eintrittsöffnung 9 entgegen der Richtung des Flüssigkeitsstromes innerhalb der Hauptverteilleitung 2 angeordnet ist. Die Austrittsöffnung 10 des Staurohres 8 ist in Richtung der Stichleitung 5 angeordnet. Das Staurohr 8 ist vorzugsweise als ein eingepreßter oder gegossener Bestandteil in die als T-Stück ausgebildete Rohrverzweigung 4 eingebracht. Damit ist eine bevorzugte Befestigung 11 der Fördereinrichtung 8 in der Rohrverzweigung 4 realisiert.
An der Austrittsöffnung 10 ist ein Schlauch 12 angeschlossen, der innerhalb der Stichleitung 5 in Richtung Entnahmestelle 6 führt. Dieser Schlauch 12, vorzugsweise aus trinkwasserzugelassenem Material, muß so starr sein, daß er innerhalb der gewählten Länge der Stichleitung 5 verbleibt, nachdem er eingeschoben oder eingezogen wurde. Die Schlauchlänge ist zumindest so gewählt, daß der Schlauch 12 den durch Eisbildung gefährdeten Bereich der Stichleitung 5 durchläuft. Bei einer großen Länge der Stichleitung 5 sind bedarfsweise Abstützelemente innerhalb der Stichleitung 5 für den Schlauch 12 einsetzbar.
Die in der Hauptverteilleitung 2 in Richtung des Pfeiles strömende Flüssigkeit tritt teilweise in die Eintrittsöffnung 9 des Staurohres 8 ein, durchfließt infolge ihres dynamischen Druckes das Staurohr 8 mit dem daran angeschlossenen Schlauch 12 in Pfeilrichtung, tritt an der Austrittsöffnung 13 des Schlauches 12 aus und strömt außerhalb des Schlauches 12, an der Innenwand der Stichleitung 5 herab und wieder zurück zur Hauptverteilleitung 2. Damit ist gewährleistet, daß infolge der dauernden Strömung der Flüssigkeit innerhalb dieser Vorrichtung zum Eisfreihalten ein Einfrieren der Leitung verhindert wird ohne aufwendige Doppelleitungen bzw. ohne ein Beheizen der Leitungen.

In der dargestellten Ausgestaltung durchläuft der Schlauch 12 soweit die Stichleitung 5, daß er in unmittelbarer Nähe des Absperrventils 7 endet und so die gesamte Stichleitung 5 bis zum Absperrventil 7 vor einer Eisbildung geschützt ist.
Die notwendige Länge des Schlauches ist abhängig von der tatsächlich auftretenden Gefährdung des Einfrierens von Leitungen. Die Hauptverteilleitung 2 ist in der Regel im Bereich des Flugzeugfußbodens verlegt und somit einer kalten Umgebung während des Fluges ausgesetzt, was schell zum Einfrieren des Leitungssystems führt.

Für die Stichleitungen 5 ist es jedoch nur in einem Bereich bis in die Passagierkabine notwendig, Vorkehrungen gegen ein Einfrieren zu treffen. Innerhalb der Passagierkabine herrschen solche Temperaturen vor, daß während des Fluges keine Eisbildung in den Leitungen möglich ist.

Die Fig. 3 stellt eine Ausführungsform der Vorrichtung zum Eisfreihalten in verzweigten Stichleitungen dar. Die Ausgestaltung des Staurohres 8 und der Hauptverteilleitung 2 im Bereich einer Rohrverzeigung 4 ist entsprechend der Fig. 2 zu entnehmen. In dieser Ausführungsform besteht die Stichleitung 5 aus einer T-förmigen Verzweigung mit zwei Leitungsteilen 5' und 5'', die zu zwei Entnahmestellen, abgesperrt durch die Absperrventile 7' und 7'', verlaufen. Innerhalb der Stichleitung 5, 5', 5'' verläuft der Schlauch 12, der ebenfalls aus einer T-förmigen Verzweigung mit bis in die Nähe der Absperrventile 7', 7'' verlaufenden Schlauchteilen 12', 12'' mit Schlauchaustrittsöffnungen 13', 13'' besteht. Durch eine Verzweigung des Schlauches 12 entsprechend der Anzahl der Verzweigungen der Stichleitung 5 und einem Austritt der Flüssigkeit an den Schlauchaustrittöffnungen 13', 13'' wird jeder Zweig der Stichleitung durchströmt, wenn der Flüssigkeitsstrom, der über das Staurohr 8 erzeugt wird, dafür ausreicht.
Falls die durch einen Teil des Flüssigkeitsstromes in der Hauptverteilleitung 2 angetriebene, als Staurohr ausgebildete Fördereinrichtung für den zu treibenden Flüssigkeitsstrom nicht ausreicht, kann anstelle des Staurohres eine andere Fördereinrichtung, beispielsweise eine Servopumpe eingesetzt werden, die mittels eines Turbinenrades oder mittels eines Elektromotors antreibbar ist.

Die Ausführungsformen der Vorrichtung zur Eisfreihaltung gemaß Fig. 1 und 2 sind für ein Wassersystem geeignet, in dem die Hauptverteilleitung 2 als Ringleitung ausgeführt ist und in der der Flüssigkeitsstrom kontinuierlich in eine Richtung verläuft. Die Ausbildung der Fördereinrichtung als Staurohr 8 ist für diese Ausgestaltung eine einfache und kostengünstige Lösung.

Bei einer Ausbildung der Hauptverteilleitung als Ein-Strang-Leitung strömt die Flüssigkeit nicht mehr kontinuierlich in eine Richtung, sondern kann ihre Strömungsrichtung wechseln. Somit muß die Fördereinrichtung für diese Ausbildung der Hauptverteilleitung auch auf zwei Strömungsrichtungen einstellbar sein.

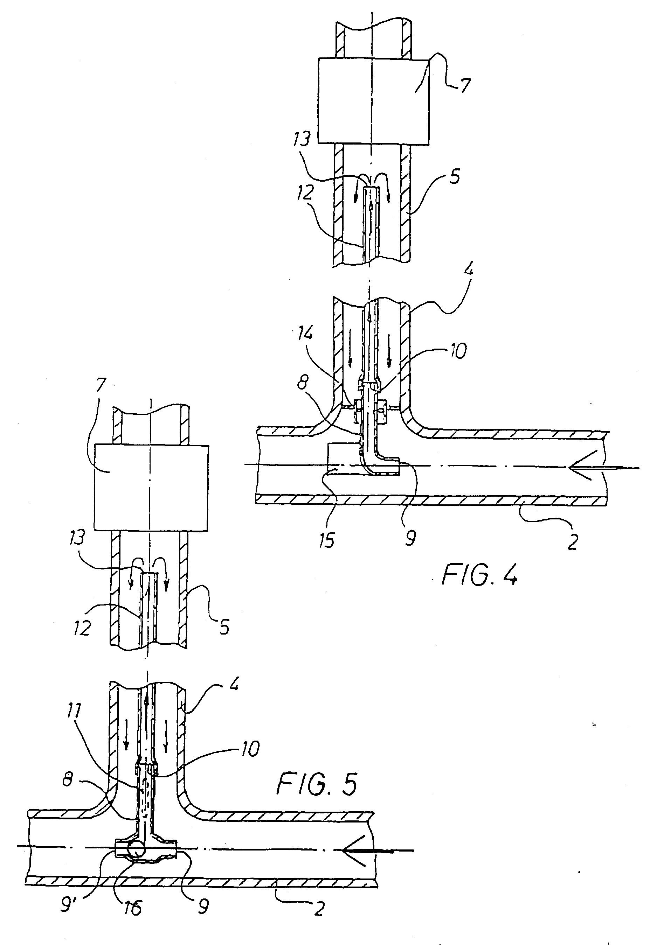

In Fig. 4 ist die entsprechende Ausgestaltungsform der Vorrichtung zum Eisfreihalten für die eben genannte Anwendung dargestellt. Die als L-förmiges Staurohr 8 ausgebildete Fördereinrichtung ist mittels eines Drehlagers 14 leicht drehbar innerhalb der Rohrverzweigung 4 gelagert und wird vom Wasserstrom jeweils richtig ausgerichtet. Dafür ist eine Ausrichtfahne 15 am Staurohr 8 derart angebracht, daß sie von der Flüssigkeit in der Hauptverteilleitung 2 in Längsrichtung umströmt wird und damit selbsttätig das Staurohr 8 dreht.

Eine Alternative dazu ist in Fig. 5 gezeigt. Das Staurohr 8 ist T-förmig ausgebildet, wobei zwei Eintrittsöffnungen 9, 9' innerhalb der Hauptverteilleitung 2 liegen und jeweils nur die entgegen der Strömungsrichtung liegende geöffnet wird. Die Austrittsöffnung 10 mit dem daran angeschlossen Schlauch 12 ist entsprechend der Fig. 2 ausgebildet. Die Öffnung der richtigen Eintrittsöffnung 9 oder 9' wird mittels einer Ventilkugel 16 erreicht. Der Staudruck, der sich innerhalb des Staurohres 8 aufbaut, bewegt die Ventilkugel 16 zur in Strömungsrichung gelegenen Öffnung und verschließt diese. Die in der Hauptverteilleitung 2 in Richtung des Pfeiles strömende Flüssigkeit tritt teilweise in die Eintrittsöffnung 9 des Staurohres 8 durchfließt infolge seines dynamischen Druckes das Staurohr 8 mit dem daran angeschlossenen Schlauch 12 in Pfeilrichtung, tritt an der Austrittsöffnung 13 des Schlauches 12 aus und strömt außerhalb des Schlauches 12, an der Innenfläche der Stichleitung 5 herab und wieder zurück zur Hauptverteilleitung 2.

Eine alternative Ausgestaltung der Fördereinrichtung 8 für die Ausbildung der Hauptverteilleitung als Ein-Strang-Leitung ist eine herkömmliche Servopumpe mit elektrischem Antrieb, die umschaltbar ist und unabhängig von der Flüssigkeitstromrichtung in der Hauptverteilleitung arbeiten kann.
Weiterhin ist auch eine turbinengetriebene Servopumpe, wie beispielsweise eine geradbeschaufelte Kreiselpumpe, für diesen Anwendungsfall einsetzbar.

Neben der Verwendung der erfindungsgemäßen Lösung in Wassersystemen in Flugzeugen sind überall dort Einsatzmöglichkeiten, wo eine stetige Durchströmung nur einseitig offener Rohrleitungen erwünscht ist. Dabei ist das Verhindern des Einfrierens in jeglichen Wasserverteilsystemen, beispielsweise auch für die Gebäudetechnik, eine wesentliche Einsatzmöglichkeit.

## Patentansprüche

1. Wassersystem mit mindestens einer Vorrichtung zum Eisfreihalten von einseitig offenen Flüssigkeitsleitungen (5), die an einer Rohrverzweigung (4) von einer Hauptverteilleitung (2) zu einer einseitig offenen Flüssigkeitsleitung (5) vorgesehen ist, wobei sich in der Hauptverteilleitung (2) eine strömende Flüssigkeit befindet und eine Fördereinrichtung (8) mit Eintritts- und Austrittsöffnung (9, 10) vorgesehen ist, deren Eintrittsöffnung (9) in die Hauptverteilleitung (2) zur Aufnahme der strömenden Flüssigkeit hineinragt und in Richtung der einseitig offenen Flüssigkeitsleitung (5) mindestens eine Austrittsöffnung (10) aufweist,
**dadurch gekennzeichnet, daß**
die Fördereinrichtung (8) innerhalb der Rohrverzweigung (4) angeordnet ist und an der Austrittsöffnung (10) der Fördereinrichtung (8) ein Schlauch (12) angeschlossen ist, der soweit in die einseitig offene Flüssigkeitsleitung (5) führt, daß er zumindest durch den durch Eisbildung gefährdeten Leitungsbereich verläuft und am Ende des Schlauches (12) die eingetretene strömende Flüssigkeit austritt und außerhalb des Schlauches (12) in Richtung Hauptverteilleitung (2) abfließt.

2. Wassersystem nach Anspruch 1,
**dadurch gekennzeichnet, daß**
die Fördereinrichtung (8) als Staurohr ausgebildet ist, wobei das Staurohr (8) innerhalb der Rohrverzweigung (4) so befestigt ist, daß die Eintrittsöffnung (9) entgegen dem Flüssigkeitsstrom in der Hauptverteilleitung (2) gerichtet ist.

3. Wassersystem nach einem der Ansprüche 1 oder 2,
**dadurch gekennzeichnet, daß**
die Fördereinrichtung bzw. das Staurohr (8) mit Befestigungselementen (11) versehen und in die Rohrverzweigung (4) eingepreßt ist.

4. Wassersystem nach einem der Ansprüche 1 oder 2,
**dadurch gekennzeichnet, daß**
die Fördereinrichtung bzw. das Staurohr (8) mit Befestigungselementen (11) versehen und in die Rohrverzweigung (4) eingegossen ist.

5. Wassersystem nach einem der Ansprüche 1 bis 4,
**dadurch gekennzeichnet, daß**
die Fördereinrichtung bzw. das Staurohr (8) mittels eines Drehlagers (14) innerhalb der Rohrverzweigung (4) drehbar gelagert ist und mittels einer Ausrichtfahne (15) entsprechend der Strömungsrichtung der Flüssigkeit ihre bzw. seine Eintrittsöffnung (9) entgegen der Strömungsrichtung liegt.

6. Wassersystem nach einem der Ansprüche 1 bis 4,
**dadurch gekennzeichnet, daß**
die Fördereinrichtung bzw. das Staurohr (8) T-förmig ausgebildet ist, wobei zwei Eintrittsöffnungen (9, 9') innerhalb der Hauptverteilleitung liegen und mittels einer Ventilkugel (16) die jeweils in Strömungsrichtung liegende verschließbar ist.

7. Wassersystem nach einem der Ansprüche 1 bis 6,
**dadurch gekennzeichnet, daß**
die Fördereinrichtung (8) als Servopumpe mit elektrischem Antrieb ausgebildet ist.

8. Wassersystem nach Anspruch 1,
**dadurch gekennzeichnet, daß**
die Fördereinrichtung (8) als mittels eines Turbinenrades angetriebene Servopumpe ausgebildet ist.

9. Wassersystem nach Anspruch 7 oder 8,
**dadurch gekennzeichnet, daß**
die Fördereinrichtung (8) entsprechend dem Flüssigkeitsstrom in der Hauptverteilleitung (2) umschaltbar ist.

10. Passagierflugzeug **dadurch gekennzeichnet, daß** es ein Wassersystem nach einem der vorangegangenen Ansprüche aufweist, wobei die einseitig offenen Flüssigkeits-Leitungen Stichleitungen (5a bis 5e) im Wassersystem des Passagierflugzeuges sind, und die Vorrichtungen zum Eisfreihalten in Rohrverzweigungen (4a bis 4e) vorgesehen sind, die von der Hauptverteilleitung (2) zu den Stichleitungen (5a bis 5e) mit Sperrelementen, vorzugsweise Entnahmestellen (6a bis 6e) führen.

## Claims

1. Water system with at least one device for preventing the formation of ice in fluid lines (5) which are open at one end, which device is provided on a pipe branch (4) of a main distribution line (2) leading to a fluid line (5) which is open at one end, a flowing fluid being located in the main distribution line (2) and a conveying device (8) with inlet and outlet apertures (9, 10) being provided, whose inlet aperture (9) projects into the main distribution line (2) in order to receive the flowing fluid and in the direction of the fluid line (5) which is open at one end comprises at least one outlet aperture (10), characterised in that the conveying device (8) is arranged inside the pipe branch (4) and a hose (12) is connected to the outlet aperture (10) of the conveying device (8) and leads into the fluid line (5) open at one end to such a degree that said hose extends at least through the line section endangered by ice formation and the flowing fluid which has entered emerges at the end of the hose (12) and outside the hose (12) flows off in the direction of the main distribution line (2).

2. Water system according to claim 1, characterised in that the conveying device (8) is constructed as a static pipe, the static pipe (8) being secured within the pipe branch (4) in such a manner that the inlet aperture (9) opposes the fluid flow in the main distribution line (2).

3. Water system according to one of claims 1 or 2, characterised in that the conveying device or static pipe (8) is provided with securing elements (11) and is pressed into the pipe branch (4).

4. Water system according to one of claims 1 or 2, characterised in that the conveying device or static pipe (8) is provided with securing elements (11) and is cast into the pipe branch (4).

5. Water system according to one of claims 1 to 4, characterised in that the conveying device or static pipe (8) is rotatably mounted within the pipe branch (4) by means of a pivot bearing (14) and according to the direction of flow of the fluid directs its inlet aperture (9) to oppose the direction of flow by means of an alignment flag (15).

6. Water system according to one of claims 1 to 4, characterised in that the conveying device or static pipe (8) is T-shaped, two inlet apertures (9, 9') lying within the main distribution line, and is closable by means of a valve ball (16) lying in the direction of flow.

7. Water system according to one of claims 1 to 6, characterised in that the conveying device (8) is constructed as a servo pump with electric drive.

8. Water system according to claim 1, characterised in that the conveying device (8) is constructed as a servo pump driven by means of a turbine wheel.

9. Water system according to claim 7 or 8, characterised in that the conveying device (8) is switchable according to the fluid flow in the main distribution line (2).

10. Passenger plane characterised in that it comprises a water system according to one of the preceding claims, the fluid lines which are open at one end being stub lines (5a to 5e) in the water system of the passenger plane, and the devices for anti-freezing being provided in pipe branches (4a to 4e), which lead from the main distribution line (2) to the stub lines (5a to 5e) with blocking elements, preferably tapping points (6a to 6e).

## Revendications

1. Circuit d'eau constitué au moins d'un dispositif antigivre pour des conduites de liquide (5) ouvertes d'un côté, qui sont prévues au niveau d'un manifold (4) d'une conduite de distribution principale (2) menant à une conduite de liquide (5) ouverte d'un côté, sachant qu'un flux de liquide passe dans la conduite de distribution principale (2) et qu'il est prévu un dispositif d'alimentation (8) pourvu d'une ouverture d'entrée et de sortie (9, 10), l'ouverture d'entrée (9) faisant saillie à l'intérieur de la conduite de distribution principale (2) pour la réception du flux de liquide et au moins une ouverture de sortie (10) étant prévue dans la direction de la conduite de liquide ouverte d'un côté, caractérisé en ce que le dispositif d'alimentation (8) est disposé à l'intérieur du manifold (4) et en ce qu'un tuyau flexible (12) est raccordé à l'ouverture de sortie (10) du dispositif d'alimentation (8), lequel tuyau flexible se prolongeant dans le conduite de liquide (5) ouverte d'une côté dans une mesure telle qu'il traverse au moins la zone de conduite craignant la formation de givre, le flux de liquide traversant le tuyau sortant à l'extrémité du tuyau (12) et s'écoulant hors de celui-ci dans la direction de la conduite de distribution principale (2).

2. Circuit d'eau suivant la revendication 1, caractérisé en ce que le dispositif d'alimentation (8) est conçu sous la forme d'un tube de Venturi, le tube de Venturi (8) étant fixé à l'intérieur du manifold (4) de telle sorte que l'ouverture d'entrée (9) soit orientée dans le sens contraire au flux de liquide traversant la conduite de distribution principale (2).

3. Circuit d'eau suivant la revendication 1 ou 2, caractérisé en ce que le dispositif d'alimentation (8), respectivement le tube de Venturi, est pourvu d'éléments de fixation (11) et est enfoncé dans le manifold (4).

4. Circuit d'eau suivant la revendication 1 ou 2, caractérisé en ce que le dispositif d'alimentation (8), respectivement le tube de Venturi, est pourvu d'éléments de fixation (11) et est scellé dans le manifold (4).

5. Circuit d'eau suivant l'une quelconque des revendications 1 à 4, caractérisé en ce que le dispositif d'alimentation (8), respectivement le tube de Venturi, est monté à rotation à l'intérieur du manifold (4) et en ce que son ouverture d'entrée (9) est orientée dans le sens contraire au flux au moyen d'un levier de direction (15) correspondant à la direction d'écoulement du liquide.

6. Circuit d'eau suivant l'une quelconque des revendications 1 à 4, caractérisé en ce que le dispositif d'alimentation (8), respectivement le tube de Venturi, est conçu sous la forme d'un T, deux ouvertures d'entrée (9, 9') étant prévues à l'intérieur de la conduite de distribution principale, l'ouverture se trouvant dans la direction d'écoulement pouvant être fermée au moyen d'une bille de soupape (16).

7. Circuit d'eau suivant l'une quelconque des revendications 1 à 6, caractérisé en ce que le dispositif d'alimentation (8) se présente sous la forme d'une servo-pompe à commande électrique.

8. Circuit d'eau suivant la revendication 1, caractérisé en ce que le dispositif d'alimentation (8) se présente sous la forme d'une servo-pompe commandée au moyen d'une roue de turbine.

9. Circuit d'eau suivant la revendication 7 ou 8, caractérisé en ce que le dispositif d'alimentation (8) peut être commuté suivant le sens du flux de liquide dans la conduite de distribution de liquide (2).

10. Avion pour le transport de passagers caractérisé en ce qu'il comporte un circuit d'eau suivant l'une quelconque des revendications précédentes, les conduites de liquide ouvertes d'un côté étant des conduites de dérivation (5a à 5e) dans le circuit d'eau de l'avion pour le transport de passagers et les dispositifs antigivre étant prévus dans les manifolds (4a à 4e) qui partent de la conduite de distribution principale (2) aux conduites de dérivation (5a à 5e) présentant des éléments de blocage, de préférence des points de prise (6a à 6e).
